# FASCICULE DE BREVET EUROPEEN

(11) **EP 1 648 753 B1**
(45) Date de publication et mention de la délivrance du brevet: **27.02.2008**
(21) Numéro de dépôt: 04767897.4
(22) Date de dépôt: 15.07.2004
(51) Int. Cl.: B61L 23/14, B61L 3/12, B61L 27/00, G01S 5/00

(54) **DISPOSITIF ET PROCEDE DE POSITIONNEMENT ET DE CONTROLE DE VEHICULES FERROVIAIRES A BANDES DE FREQUENCE ULTRA LARGES**
VORRICHTUNG UND VERFAHREN ZUR POSITIONIERUNG UND STEUERUNG VON SCHIENENFAHRZEUGEN MIT ULTRABREITBAND
DEVICE AND METHOD FOR POSITIONING AND CONTROLLING RAILWAY VEHICLES WITH ULTRA-LARGE BANDWIDTH

(30) Priorité: 16.07.2003 FR 0350336
(43) Date de publication de la demande: 26.04.2006
(73) Titulaire: INSTITUT NATIONAL DE RECHERCHE SUR LES TRANSPORTS ET LEUR SECURITE (INRETS), 94114 Arceuil Cédex (FR); CENTRE NATIONAL DE LA RECHERCHE SCIENTIFIQUE (CNRS), 75794 Paris Cedex 16 (FR)
(72) Inventeur: HEDDEBAUT, Marc, F-59262 Sainghin en Melantois (FR); RIVENQ-MENHAJ, Atika, F-59269 Artres (FR); ROUVAEN, Jean-Michel, F-59770 Marly (FR); ELBAHHAR, Fouzia, F-59300 Aulnoy-Lez-Valenciennes (FR); GHYS, Jean-Pierre, F-59310 Sameon (FR)
(74) Mandataire: Catherine, Alain
(86) Numéro de dépôt international: PCT/FR2004/050336
(87) Numéro de publication internationale: WO 2005/007482

(56) Documents cités:
- EP-A- 0 341 826
- DE-A- 4 336 799
- DE-C- 19 907 466
- US-A- 5 366 183
- US-A- 5 420 883

## Description

Pour l'aménagement des grandes agglomérations urbaines qui ont vu leur population croître très rapidement au XX^{eme} siècle, la voie ferrée souterraine reste la solution de référence pour les transports collectifs. Ces voies au moins partiellement souterraines répondent en effet au souci récent de libérer le centre des agglomérations de tout véhicule et de les rendre à la libre circulation à pieds des citadins tout en traversant radialement ces agglomérations et en étant donc plus efficaces que les rocades. Toutefois, l'amélioration de la qualité de service ou du sentiment de sécurité des passagers transportés par un système de transport ferroviaire urbain entièrement automatisé requiert beaucoup d'efforts dans de nombreux domaines.

Elle requiert tout d'abord une communication sol - véhicule ferroviaire permanente et de grande capacité de transmission pour répondre, en plus des besoins de base d'échange d'information entre des automatismes de bord et de sol, à l'apparition de besoins nouveaux tels que la surveillance par caméras vidéos de l'intérieur du véhicule pour la sécurité des passagers ou la transmission de communications à haut débit à l'usage des passagers, de type information multimodale ou services multimédias.

On assiste parallèlement à une augmentation de la distance moyenne entre les stations des lignes de transport ferroviaire urbain par rapport au réseau ancien. Cette distance qui est d'environ 500 m sur l'ancien réseau métropolitain de Paris est, par exemple, passée à 2000 m sur la ligne automatique "Météor" construite en 1998. Cet allongement de l'intervalle entre les stations, qui dépend de l'aménagement des villes à desservir, permet d'augmenter la vitesse commerciale des rames de transport pour atteindre des vitesses proches de 50 km/h alors qu'elles ne sont que d'environ 25 km/h sur les réseaux anciens. Ce gain en vitesse ne vise pas seulement une diminution du temps de trajet moyen de l'usager mais aussi de permettre un flux de passagers suffisant pour répondre aux périodes dites de pointe.

A cette augmentation de la distance moyenne inter-stations s'ajoute un souci de faciliter, de plus en plus, la maintenance des lignes et de ne disposer que de très peu d'éléments au sol, en voie et en inter-stations tels que supports de communication, balise... En absence de support de communication (câble, guide rayonnant...), une technologie radio en propagation libre est donc employée.

Tous les systèmes de pilotage actuels en service utilisent des signaux sinusoïdaux fondés sur des technologies radio bande étroite ou à étalement de spectre. Les équipements radio sont donc de préférence installés de loin en loin en station.

Toutefois, lorsque l'on considère la propagation de signaux radioélectriques sinusoïdaux en tunnel, en basse fréquence, soit jusque quelques centaines de MHz, ces signaux s'atténuent très rapidement. L'atténuation peut atteindre des valeurs de l'ordre de 30 à 40 dB par 100 m à 100 MHz en tunnel routier. Cette caractéristique physique rend donc leurs utilisations incompatibles avec les portées inter-stations couramment envisagées en transport guidé urbain moderne (de l'ordre du kilomètre).

L'objectif de la présente invention est donc de proposer un dispositif et un procédé de positionnement et de contrôle de véhicules ferroviaires à bandes de fréquence ultra larges simple dans leur conception et dans leur mode opératoire, à très haut transfert de données et économique, limitant les risques d'interférences avec d'autres systèmes de communication sans fils, permettant une télécommunication véhicule ferroviaire-sol avec une couverture radioélectrique, notamment en tunnel, proche de 100% et à grande disponibilité, une odométrie du véhicule ferroviaire très fiable et une perception de l'environnement frontal dudit véhicule pour la détection d'obstacle et donc une sécurité renforcée des passagers. Ce système permet également d'assurer une communication directe entre véhicules, qui s'avérait nécessaire dans certains modes d'exploitation.

A cet effet, l'invention concerne un dispositif de positionnement et de contrôle de véhicules ferroviaires comprenant des postes fixes comportant des premiers moyens d'émission - réception de signaux et un poste central de contrôle auxquels sont reliés les postes fixes et contrôlant une zone de transport.
Selon l'invention,
- chaque véhicule ferroviaire comprend des deuxièmes moyens d'émission - réception de signaux comportant un identifiant spécifique de l'émetteur et au moins un message,
- les signaux émis par les premiers moyens d'émission - réception des postes fixes comportent un identifiant spécifique de l'émetteur et au moins un message,
- le poste central de contrôle envoie des ordres de contrôle commande ferroviaire,
- chaque véhicule ferroviaire et chaque poste fixe comprennent des moyens de traitement pour déterminer l'identifiant et au moins ledit message de chaque signal reçu,
- les signaux des premiers et deuxièmes moyens d'émission - réception sont des signaux radio non sinusoïdaux à très grande bande passante dont le spectre de fréquence est compris entre 1 et 10 GHz.

On appelle, ici, " véhicule ferroviaire ", tout système de transport guidé que le guidage soit assuré par voies ferrées, des longrines ou tout autre moyen.

Dans différents modes de réalisation particuliers du dispositif de positionnement et de contrôle de véhicules ferroviaires, chacun ayant ses avantages particuliers et susceptibles de nombreuses combinaisons techniques possibles:
- chaque véhicule ferroviaire comporte d'une part, des moyens pour déterminer la position et la direction dudit véhicule dans la zone de transport et, d'autre part, des moyens pour déterminer une mesure de vitesse vraie dudit véhicule, lesdits moyens recevant des signaux des moyens de traitement,
- chaque véhicule ferroviaire comporte des moyens pour détecter des obstacles passifs ou d'autres véhicules sur les voies recevant des signaux desdits moyens de traitement,
- la localisation dans la zone de transport, la vitesse et la direction de chaque véhicule ferroviaire sont déterminées d'une part, et la détection d'obstacle est réalisée d'autre part, en temps réel et simultanément,
- ledit identifiant spécifique est obtenu par codage pseudo aléatoire,
- les ordres de contrôle commande ferroviaire émis par le poste central comprennent des instructions de navigation d'au moins un véhicule ferroviaire,
- lesdits ordres comprennent une communication pour ledit véhicule ferroviaire,
- le poste central de contrôle comprend une unité de traitement pour centraliser et traiter les données envoyées par les postes fixes et des moyens pour afficher lesdites données sur écran en temps réel.

L'invention concerne également un procédé de positionnement et de contrôle de véhicules ferroviaires comprenant des postes fixes comportant des premiers moyens d'émission - réception de signaux et un poste central de contrôle auxquels sont reliés les postes fixes.

Selon l'invention,
- chaque véhicule ferroviaire comprend des deuxièmes moyens d'émission - réception de signaux,
- on détermine un identifiant spécifique pour chacun des premiers et deuxièmes moyens d'émission - réception, lesdits signaux étant des signaux radio non sinusoïdaux à très grande bande passante dont le spectre de fréquence est compris entre 1 et 10 GHz comportant ledit identifiant et au moins un message,
- on détermine pour chacun des signaux reçus par le poste fixe et par chaque véhicule ferroviaire l'identifiant et au moins ledit message de ce signal par des moyens de traitement,
- on envoie des ordres de contrôle commande ferroviaire par le poste central de contrôle.

Dans différents modes de réalisation, la présente invention concerne également les caractéristiques suivantes qui devront être considérées isolément ou selon toutes leurs combinaisons techniquement possibles :
- on découpe la zone de transport contrôlée par le poste central et dans laquelle se déplacent les véhicules ferroviaires, en un réseau de points défini par la répétition d'une même maille élémentaire de longueur D,
- on fixe la longueur D de la maille élémentaire à typiquement quelques centaines de mètres,
- on envoie des ordres de contrôle commande ferroviaire par le poste central de contrôle à chaque véhicule ferroviaire pour qu'un seul véhicule soit compris à chaque instant sur la longueur D,
- on envoie des ordres de contrôle commande ferroviaire par le poste central de contrôle à au moins deux véhicules ferroviaires pour réaliser une manoeuvre de rendez-vous sur la longueur D,
- la longueur D de la maille élémentaire est variable dans le temps,
- on détermine en temps réel à partir des signaux émis par chaque véhicule ferroviaire, la longueur D de la maille élémentaire, celle-ci étant au moins égale à la distance de sécurité Dₘᵢₙ entre chaque véhicule, le poste central envoyant des ordres de contrôle commande ferroviaire à chaque véhicule ferroviaire pour maintenir ladite distance D entre chaque véhicule,
- on détermine par les deuxièmes moyens d'émission - réception et pour chaque véhicule ferroviaire en mouvement, des obstacles passifs sur les voies.

Le dispositif et le procédé de contrôle et de positionnement tel que décrit précédemment peuvent avantageusement être utilisés pour des rames automatiques de transport métropolitain.

L'invention sera décrite plus en détail en référence aux dessins annexés dans lesquels:

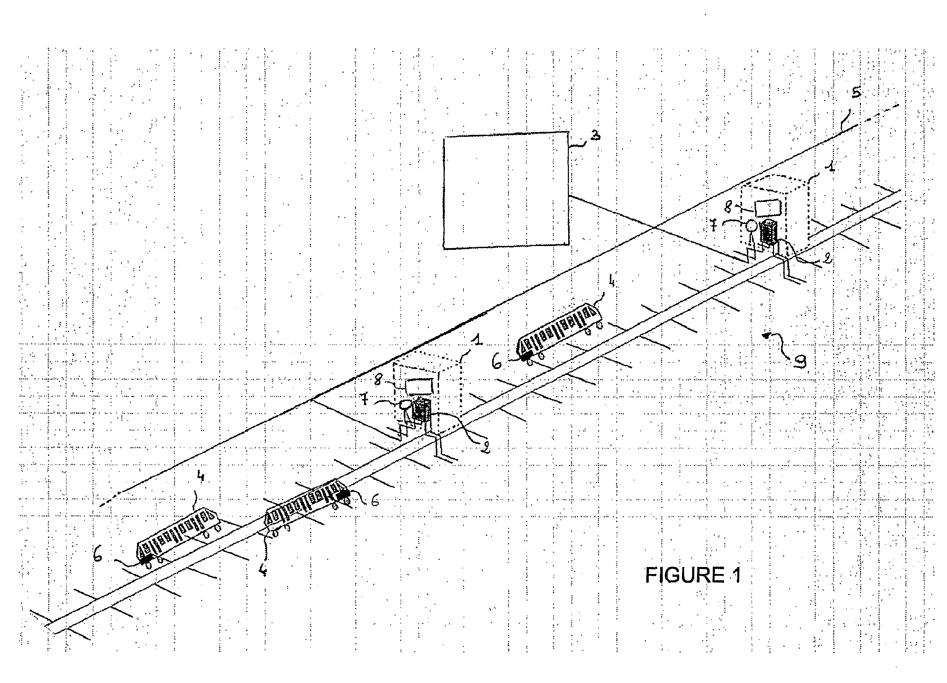

- la figure 1 est une représentation schématique du dispositif de positionnement et de contrôle de véhicules ferroviaires selon un mode de réalisation de l'invention.

La Figure 1 montre un dispositif de positionnement et de contrôle de véhicules ferroviaires selon un mode de réalisation particulier de l'invention. Ce dispositif comprend des postes fixes 1 comportant des premiers moyens d'émission - réception 2 de signaux. Il comprend également un poste central de contrôle 3 contrôlant une zone de transport et auxquels sont reliés les postes fixes 1. Ce poste central de contrôle 3 envoie des ordres de contrôle commande ferroviaire. Dans un mode de réalisation préféré, ces ordres comprennent des instructions de navigation pour au moins un véhicule ferroviaire 4 localisé dans la zone de transport contrôlée par ledit poste central 3. Ces ordres peuvent comporter de plus une communication à l'usage des passagers présents à bord dudit véhicule ferroviaire 4 de type information trafic, messages multimédias, ...

Les informations sol traitées par les postes fixes 1 peuvent être agrégées entre tous les postes fixes 1 par une liaison 5 point à point par exemple par fibre optique afin que le poste central de contrôle 3 ait une connaissance exhaustive des vitesses, positions et états de tous les véhicules ferroviaires 4 en circulation sur une ligne ou sur l'ensemble de la zone de transport.

Le poste central de contrôle 3 peut comprendre une unité de traitement pour centraliser et traiter les données envoyées par les postes fixes et des moyens pour afficher lesdites données sur écran en temps réel.

Chaque véhicule ferroviaire 4 comprend des deuxièmes moyens d'émission - réception 6 de signaux. Les signaux émis par les premiers et deuxièmes moyens d'émission - réception de signaux 2, 6 comportent un identifiant spécifique de l'émetteur et au moins un message. En effet, le long d'une ligne de transport guidé urbain, il existe un nombre fini de stations et donc de postes fixes 1 associés à chacune de ces stations, de l'ordre de quelques dizaines. Il existe également un nombre fini de véhicules ferroviaires 4 se déplaçant dans la zone de transport contrôlée par le poste central de contrôle 3. Chaque poste fixe 1, et donc station, et chaque véhicule ferroviaire 4 peuvent donc se voir attribuer un identifiant unique à l'instar des codes PRN des satellites GPS (système de positionnement global - Global positioning system).

On appelle, ici, "identifiant", un code et une identité spécifiques qui sont attribués à un émetteur. Ces identifiants sont connus de tout le réseau de transport mais non divulgués à l'extérieur car ces éléments sont tenus confidentiels afin d'améliorer la furtivité des communications et ainsi d'augmenter la sécurité globale du système de transport. Ces identifiants uniques par véhicule ferroviaire 4 et poste fixe 1 modulent un train d'impulsions selon une technique ultra large bande. En communication radio, l'écart entre impulsions successives peut, en effet, être maintenu constant ou varié par une information, un code ou les deux à la fois. Préférentiellement, ledit identifiant spécifique est obtenu par codage pseudo aléatoire.

On dispose d'un seul canal de transmission radio, typiquement en tunnel. Pour réaliser le dispositif de contrôle-commande, plusieurs véhicules ferroviaires ou postes fixes, doivent pouvoir accéder simultanément à ce canal radio. A l'instar de la constellation de satellites GPS, émettant tous sur le même canal radio en bande L, il est donc associé à chaque élément véhicule ferroviaire ou poste fixe de communication du réseau de transport un code particulier issu d'une famille (par exemple, famille des codes de Gold dans le cas des satellites GPS ou encore des codes issus de familles fonctions orthogonales). Une propriété particulièrement recherchée de cette famille de codes réside dans ses propriétés d'orthogonalité qui permettent à un récepteur de discriminer les signaux, dans ce domaine des codes, avec un minimum d'interférences.

Les signaux des premiers et deuxièmes moyens d'émission - réception 2, 6 sont des signaux radio à très grande bande passante dont le spectre de fréquence est compris entre 1 et 10 GHz. En effet, pour ces hautes fréquences, le tunnel s'apparente à un guide d'ondes surdimensionné. Dès lors, pour des sections de tunnel de quelques centaines de mètres, les signaux de fréquences 1 à 10 GHz s'atténuent beaucoup plus faiblement. Il en résulte que les bilans de transmission de ces signaux sont compatibles avec une portée de l'ordre du kilomètre. Ces signaux se trouvent donc parfaitement encadrés dans la gamme de fréquence se propageant efficacement en tunnel de métro. De plus, la large étendue spectrale des signaux exploités ainsi que la durée élémentaire très faible (de l'ordre de la nanoseconde) d'un signal ultra large bande permettent, de s'affranchir des conditions difficiles de propagation en tunnel caractérisées par des chemins multiples nombreux liés aux réflexions sur les parois ainsi qu'à des étalements de signaux qui peuvent atteindre, en tunnel, quelques dizaines de nanosecondes. La technologie ultra large bande permet donc d'avoir une couverture radioélectrique optimale nécessaire à un système de pilotage automatique de véhicules ferroviaires du type rame de métro automatique.

Les premiers et deuxièmes moyens d'émission - réception 2, 6 comprennent par exemple une antenne large bande 7. Cette antenne 7 peut être, lorsque l'on souhaite un rayonnement peu directif, en embarqué par exemple, un monopôle de type disque circulaire ou un dipôle constitué de deux disques circulaires. Cette disposition, parmi de nombreuses autres solutions d'antennes large bande, permet d'obtenir la bande passante requise de 1 à 10 GHz pour des diamètres de disque inférieurs à une dizaine de centimètres. Ces antennes 7 peuvent également être placées, par exemple en station pour des postes fixes 1, au foyer d'une parabole ou d'un élément de focalisation à large bande afin d'en augmenter la directivité et d'améliorer le bilan de transmission de la liaison sol - véhicule ferroviaire.

Chaque véhicule ferroviaire 4 et chaque poste fixe 1 comprennent des moyens de traitement 8 pour déterminer l'identifiant et au moins ledit message de chaque signal reçu. Ainsi, puisque l'émetteur de chaque poste fixe 1 ou de chaque véhicule ferroviaire se voit attribuer un code spécifique et que les premiers et deuxièmes moyens d'émission - réception 2, 6 comportent en mémoire de stockage les identifiants des différents moyens d'émission - réception ultra large bande du réseau, chaque récepteur ultra large bande fixe ou mobile peut jouer en local ces différents identifiants et tenter de décoder par corrélation les signaux émanant des premiers moyens d'émission - réception 2 des postes fixes 1 (stations) ou des deuxièmes moyens d'émission - réception 6 émanant des véhicules ferroviaires 4, du type rames à portée radioélectrique. Chaque moyen d'émission - réception 2, 6 dispose ainsi de:
- Une ou plusieurs voies de traitement verrouillées sur les codes des postes fixes 1 (stations) et véhicules ferroviaires 4 (rames) en portée radio. Elles récupèrent les données d'exploitation transmises (identité, vitesses, positions, état des rames et stations...) ;
- Une voie ou plusieurs voies de traitement calculent les vitesses par rapport aux postes fixes 1 ou véhicules ferroviaires 4 avec lesquelles la communication ultra large bande est établie ;
- Une voie calcule la distance entre stations afin de déterminer la position de la rame 4 entre deux stations intermédiaires identifiées de la zone de transport ;
- Une voie scrute l'apparition de nouveau véhicules ferroviaires 4 ou postes fixes 1 dans la zone de couverture radio en générant localement l'ensemble des codes véhicules 4 et postes fixes 1 et en tentant de détecter par corrélation un signal nouveau utile.

Chaque poste fixe 1 peut donc connaître les informations de base relatives aux véhicules ferroviaires 4 qui circulent dans sa zone de couverture 9. Il est possible au sol de mesurer à distance les vitesses et positions de ces véhicules ferroviaires 4 ou bien encore de recevoir ces informations élaborées à bord du véhicule ferroviaire 4 sur la base de l'analyse des signaux à bande ultra large échangées entre le sol et les véhicules 4.

L'ensemble des véhicules ferroviaires 4 peut calculer sa distance aux stations fixes aval et amont où ils sont localement situés. Les véhicules 4 peuvent également acquérir les informations d'identité, de vitesse et de position par rapport aux autres véhicules 4 qui se trouvent à proximité.

Ce dispositif de positionnement et de contrôle permet une odométrie train précise. Elle comprend une localisation précise des véhicules ferroviaires 4 (rames...) dans la zone de transport capable d'autoriser à titres d'exemples le « tir au but », soit la capacité à gérer automatiquement l'arrêt de véhicules ferroviaires 4 précisément devant des portes palières ou encore l'entrée sur une zone de voie particulière de quelques centaines de mètres appelée canton. En première approximation, les véhicules ferroviaires 4 se déplacent selon une seule dimension le long des voies. Une mesure de distance par rapport à un repère fixe amont et/ou aval tel que fondé sur le temps de vol de signaux issus d'équipements géolocalisés et situés en stations amont/aval détermine, de façon certaine et précise, la position absolue du mobile guidé. En considérant de nouveau l'ordre de grandeur de la durée d'une impulsion élémentaire ultra large bande, de l'ordre de la nanoseconde quelle que soit la forme d'onde employée, cette durée correspond à une distance parcourue dans l'air d'environ 30 cm. Une résolution en distance égale à une fraction de cette longueur peut être obtenue par traitement du signal. Ceci conduit à une résolution en distance de l'ordre de quelques centimètres, ce qui est compatible notamment avec l'objectif de tir au but pour un arrêt précis devant une porte palière d'un véhicule ferroviaire 4. La technologie ultra large bande permet également d'atteindre, notamment par dérivation de cette distance, une mesure de vitesse « vraie du véhicule ferroviaire », réalisée sans pénaliser les capacités cinématiques des véhicules (pas d'essieu défreiné...) et performante y compris pour de faibles vitesses (détection de vitesse nulle - arrêt du véhicule).

Chaque véhicule ferroviaire 4 comporte également des moyens pour détecter des obstacles passifs sur les voies par la perception de l'environnement frontal du véhicule au moyen d'une technologie radar ultra large bande. Une voie verrouillée sur le code incident émis par les deuxièmes moyens d'émission- réception tente de détecter des obstacles passifs en voie. Cette surveillance autorise la détection d'obstacles (objets laissés sur la voie lors de travaux de nuit, chutes de pierre de la voûte d'un tunnel...) ou d'autres véhicules et permet de réagir sur le programme de vitesse de la rame (freinage d'urgence par exemple en cas d'obstacle inopiné). Dans ce dernier cas, cette fonction de surveillance permet l'exploitation du système de transport selon des modes particuliers tels que l'accostage de véhicules en panne ou l'exploitation d'une ligne en rames scindables disposant, à titre d'exemple, d'un maximum d'éléments roulants au centre de la ligne et d'un minimum aux extrémités.

L'invention concerne également un procédé de positionnement et de contrôle de véhicules ferroviaires 4 comprenant des postes fixes 1 comportant des premiers moyens d'émission - réception 2 de signaux et un poste central de contrôle 3 auxquels sont reliés les postes fixes 1. Chaque véhicule ferroviaire 4 comprend des deuxièmes moyens d'émission - réception de signaux 6.

Selon ce procédé, on détermine un identifiant spécifique pour chacun des premiers et deuxièmes moyens d'émission - réception 2, 6, lesdits signaux étant des signaux radio non sinusoïdaux à très grande bande passante dont le spectre de fréquence est compris entre 1 et 10 GHz comportant ledit identifiant et au moins un message. On détermine pour chacun des signaux reçus par le poste fixe 1 et par chaque véhicule ferroviaire 4 l'identifiant et au moins ledit message de ce signal par des moyens de traitement. On envoie des ordres de contrôle commande ferroviaire par le poste central de contrôle.

Une exploitation de ligne ferroviaire s'effectue selon deux modes possibles d'exploitation. Pour les deux modes, on découpe donc la zone de transport contrôlée par le poste central 3 et dans laquelle se déplacent les véhicules ferroviaires 4, en un réseau de points défini par la répétition d'une même maille élémentaire de longueur D.

La longueur D de la maille élémentaire peut être fixée à typiquement quelques centaines de mètres et on est alors en mode dit en cantons fixes. On envoie alors des ordres de contrôle commande ferroviaire par le poste central de contrôle 3 à chaque véhicule ferroviaire 4 pour qu'un seul véhicule soit compris à chaque instant sur la longueur D. Ce mode d'exploitation en cantons fixes (fixed block) est le mode d'exploitation le plus général. La ligne de métro, d'une longueur de quelques kilomètres, est divisée matériellement en une série de cantons de longueur fixe. Le système de pilotage automatique exploite les informations issues des trains et du sol (vitesse, position, détecteurs d'entrée et d'occupation de cantons) afin de tout mettre en oeuvre pour qu'une rame et une seule occupe, à chaque instant, un canton. A titre d'exemple, les automatismes fixes et embarqués vont dialoguer, préparer et gérer l'arrêt, en limite de canton amont, d'une rame qui tenterait de pénétrer sur un canton aval occupé par une autre rame.

La longueur D de la maille élémentaire peut également être variable dans le temps et on est alors en mode dit en cantons mobiles déformables (moving blocks). On détermine en temps réel à partir des signaux émis par chaque véhicule ferroviaire 4, la longueur D de la maille élémentaire, celle-ci étant au moins égale à la distance de sécurité Dₘᵢₙ entre chaque véhicule, le poste central 3 envoyant des ordres de contrôle commande ferroviaire à chaque véhicule ferroviaire 4 pour maintenir ladite distance D entre chaque véhicule. Dans ce deuxième mode d'exploitation, la ligne ferroviaire n'est cette fois plus délimitée en cantons immuables mais un poste central de commande 3 reçoit les informations de vitesse et position de chacun des véhicules ferroviaires 4 de la ligne. Il calcule en permanence des intervalles de sécurité devant chacun des trains permettant à ceux-ci de s'arrêter en sécurité en cas de besoin. En fonction des capacités cinématique des trains (vitesse, capacités de freinage, adhérence), cette distance évolue rapidement. Ces informations sont rafraîchies en permanence sur la base des vitesses et positions transmises périodiquement par toutes les rames. Le sol calcule et envoie en retour à chacun des trains de la ligne des autorisations de vitesse et de parcours valables pendant une durée limitée de temps (qq. centaines de millisecondes). Ce mode d'exploitation permet en théorie d'exploiter un maximum de rames sur la ligne et donc d'optimiser la ressource de transport.

Grâce à la communication directe inter véhicule, ce calcul peut également s'effectuer à bord des rames sans avoir recours à des moyens techniques fixes, au sol. La gestion de la ligne s'effectue directement depuis les rames, le sol n'ayant qu'un rôle de supervision.

Un mode d'opération mixte existe cependant. Lorsqu'une rame tombe en panne ou, sur certaines lignes exploitées en rames scindables, des manoeuvres de rendez-vous doivent avoir lieu afin qu'une rame puisse venir pousser hors exploitation la rame en panne ou venir s'accoupler à une rame existante afin d'offrir par exemple en zone centrale de ligne particulièrement chargée une capacité de transport supplémentaire. Dans ces deux cas de figure, une rame pénètre sur un canton occupé et le système doit gérer en sécurité ce fonctionnement qui s'avère donc contraire au principe de base de l'exploitation d'une ligne en cantons fixes.

Le dispositif et le procédé de positionnement et de contrôle de véhicules ferroviaires 4, selon l'invention, peuvent avantageusement être mis en oeuvre pour satisfaire une ou plusieurs des fonctions suivantes :
i) communication sol- véhicule ferroviaire 4,
ii) communication directe entre véhicules ferroviaires 4,
iii) localisation précise des véhicules ferroviaires 4 (rames...) dans la zone de transport contrôlée par le poste central de commande 3,
iv) mesure de vitesse « vraie du véhicule ferroviaire », réalisée sans pénaliser les capacités cinématiques des véhicules (pas d'essieu défreiné...) et performante y compris pour de faibles vitesses (détection de vitesse nulle - arrêt du véhicule),
v) surveillance des obstacles passifs ou d'autres véhicules sur les voies par la perception de l'environnement frontal du véhicule ferroviaire au moyen d'une technologie radar ultra large bande.

## Revendications

1. Dispositif de positionnement et de contrôle de véhicules ferroviaires (4) comprenant des postes fixes (1) comportant des premiers moyens d'émission - réception (2) de signaux et un poste central de contrôle (3) auxquels sont reliés les postes fixes (1) et contrôlant une zone de transport, **caractérisé en ce que**,
- chaque véhicule ferroviaire (4) comprend des deuxièmes moyens d'émission - réception de signaux (6) comportant un identifiant spécifique de l'émetteur et au moins un message,
- les signaux émis par les premiers moyens d'émission - réception (2) des postes fixes (1) comportent un identifiant spécifique de l'émetteur et au moins un message,
- le poste central de contrôle (3) envoie des ordres de contrôle commande ferroviaire,
- chaque véhicule ferroviaire (4) et chaque poste (1) fixe comprennent des moyens de traitement (8) pour déterminer l'identifiant et au moins ledit message de chaque signal reçu,
- les signaux des premiers et deuxièmes moyens d'émission - réception (2, 6) sont des signaux radio non sinusoïdaux à très grande bande passante dont le spectre de fréquence est compris entre 1 et 10 GHz.

2. Dispositif selon la revendication 1, **caractérisé en ce que** chaque véhicule ferroviaire (4) comporte d'une part, des moyens pour déterminer la position et la direction dudit véhicule dans la zone de transport et d'autre part, des moyens pour déterminer une mesure de vitesse vraie dudit véhicule, lesdits moyens recevant des signaux des moyens de traitement.

3. Dispositif selon la revendication 1 ou 2, **caractérisé en ce que** chaque véhicule ferroviaire (4) comporte des moyens pour détecter des obstacles passifs ou d'autres véhicules sur les voies recevant des signaux desdits moyens de traitement.

4. Dispositif selon l'une quelconque des revendications 1 à 3, **caractérisé en ce que** la localisation dans la zone de transport, la vitesse et la direction de chaque véhicule ferroviaire (4) sont déterminées d'une part, et la détection d'obstacle est réalisée d'autre part, en temps réel et simultanément.

5. Dispositif selon l'une quelconque des revendications 1 à 4, **caractérisé en ce que** ledit identifiant spécifique est obtenu par codage pseudo aléatoire.

6. Dispositif selon l'une des revendications 1 à 5, **caractérisé en ce que** les ordres de contrôle commande ferroviaire émis par le poste central (3) comprennent des instructions de navigation d'au moins un véhicule ferroviaire (4).

7. Dispositif selon la revendication 6, **caractérisé en ce que** lesdits ordres comprennent une communication pour ledit véhicule ferroviaire (4).

8. Dispositif selon l'une quelconque des revendications 1 à 7, **caractérisé en ce que** le poste central de contrôle (3) comprend une unité de traitement pour centraliser et traiter les données envoyées par les postes fixes (1) et des moyens pour afficher lesdites données sur écran en temps réel.

9. Procédé de positionnement et de contrôle de véhicules ferroviaires comprenant des postes fixes (1) comportant des premiers moyens d'émission - réception de signaux (2) et un poste central de contrôle (3) auxquels sont reliés les postes fixes (1),
**caractérisé en ce que**,
- chaque véhicule ferroviaire (4) comprend des deuxièmes moyens d'émission - réception (6) de signaux,
- on détermine un identifiant spécifique pour chacun des premiers et deuxièmes moyens d'émission - réception (2, 6), lesdits signaux étant des signaux radio non sinusoïdaux à très grande bande passante dont le spectre de fréquence est compris entre 1 et 10 GHz comportant ledit identifiant et au moins un message,
- on détermine pour chacun des signaux reçus par le poste fixe (1) et par chaque véhicule ferroviaire (4) l'identifiant et au moins ledit message de ce signal par des moyens de traitement (8),
- on envoie des ordres de contrôle commande ferroviaire par le poste central de contrôle (3).

10. Procédé selon la revendication 9, **caractérisé en ce qu'**on découpe la zone de transport contrôlée par le poste central (3) et dans laquelle se déplacent les véhicules ferroviaires (4), en un réseau de points défini par la répétition d'une même maille élémentaire de longueur D.

11. Procédé selon la revendication 10, **caractérisé en ce qu'**on fixe la longueur D de la maille élémentaire à typiquement quelques centaines de mètres.

12. Procédé selon la revendication 11, **caractérisé en ce qu'**on envoie des ordres de contrôle commande ferroviaire par le poste central de contrôle (3) à chaque véhicule ferroviaire (4) pour qu'un seul véhicule (4) soit compris à chaque instant sur la longueur D.

13. Procédé selon la revendication 11, **caractérisé en ce qu'**on envoie des ordres de contrôle commande ferroviaire par le poste central de contrôle (3) à au moins deux véhicules ferroviaires pour réaliser une manoeuvre de rendez-vous sur la longueur D.

14. Procédé selon la revendication 10, **caractérisé en ce que** la longueur D de la maille élémentaire est variable dans le temps.

15. Procédé selon la revendication 14 **caractérisé en ce qu'**on détermine en temps réel à partir des signaux émis par chaque véhicule ferroviaire (4), la longueur D de la maille élémentaire, celle-ci étant au moins égale à la distance de sécurité Dₘᵢₙ entre chaque véhicule, le poste central (3) envoyant des ordres de contrôle commande ferroviaire à chaque véhicule ferroviaire (4) pour maintenir ladite distance D entre chaque véhicule.

16. Procédé selon l'une quelconque des revendications 9 à 15 **caractérisé en ce qu'**on détermine par les deuxièmes moyens d'émission - réception (6) et pour chaque véhicule ferroviaire (4) en mouvement, des obstacles passifs sur les voies.

## Claims

1. A device for positioning and controlling rail vehicles (4) including fixed stations (1) comprising first signal transmission - reception means (2) and a central control station (3) to which are connected the fixed stations (1) and controlling a transport zone,
**characterised in that**,
- each rail vehicle (4) comprises second signal transmission - reception means (6) containing a specific identifier of the transmitter and at least one message,
- the signals transmitted by the first transmission - reception means (2) of the fixed stations (1) contain a specific identifier of the transmitter and at least one message,
- the central control station (3) sends rail operation control orders,
- each rail vehicle (4) and each fixed station (1) include processing means (8) for determining the identifier and at least said message of each signal received,
- the signals of the first and second transmission - reception means (2, 6) are non-sinewave radio signals with a very large passband whereof the frequency spectrum ranges between 1 and 10 GHz.

2. A device according to claim 1, **characterised in that** each rail vehicle (4) includes on the one hand, means for determining the position and the direction of said vehicle in the transport zone and on the other hand, means for determining an actual speed measurement of said vehicle, said means receiving signals from the processing means.

3. A device according to claim 1 or 2, **characterised in that** each rail vehicle (4) includes means for detecting passive obstacles or other vehicles on the lanes receiving signals from said processing means.

4. A device according to any of the claims 1 to 3, **characterised in that** the localisation in the transport zone, the speed and the direction of each rail vehicle (4) are determined on the one hand, and the detection of obstacles is realised on the other hand, in real time and simultaneously.

5. A device according to any of the claims 1 to 4, **characterised in that** said specific identifier is obtained by pseudo-random encoding.

6. A device according to one of the claims 1 to 5, **characterised in that** the rail operation control orders transmitted by the central station (3) include navigation instructions of at least one rail vehicle (4).

7. A device according to claim 6, **characterised in that** said orders comprise a communication for said rail vehicle (4).

8. A device according to any of the claims 1 to 7, **characterised in that** the central control station (3) includes a processing unit for centralising and processing the data sent by the fixed stations (1) and means for displaying said data on a screen in real time.

9. A method for positioning and controlling rail vehicles including fixed stations (1) comprising first signal transmission - reception means (2) and a central control station (3) to which are connected the fixed stations (1),
**characterised in that**,
- each rail vehicle (4) comprises second signal transmission - reception means (6),
- a specific identifier is determined for each of the first and second transmission - reception means (2, 6), said signals being non-sinewave radio signals with a very large passband whereof the frequency spectrum ranges between 1 and 10 GHz containing said identifier and at least one message,
- for each of the signals received by the fixed station (1) and by each rail vehicle (4) the identifier and at least said message of this signal are determined by processing means (8),
- rail operation control orders are sent by the central control station (3).

10. A method according to claim 9, **characterised in that** the transport zone controlled by the central station (3) and wherein the rail vehicles (4) are displaced, is divided into a grid of points defined by the repetition of a same elementary mesh of length D.

11. A method according to claim 10, **characterised in that** the length D of the elementary mesh is set typically to several hundred metres.

12. A method according to claim 11, **characterised in that** rail operation control orders are sent by the central control station (3) to each rail vehicle (4) so that a single vehicle (4) is included any time over the length D.

13. A method according to claim 11, **characterised in that** rail operation control orders are sent by the central control station (3) to at least two rail vehicles to conduct a rendezvous manoeuvre over the length D.

14. A method according to claim 10, **characterised in that** the length D of the elementary mesh is variable with time.

15. A method according to claim 14 **characterised in that** the length D of the elementary mesh is determined in real time from the signals transmitted by each rail vehicle (4), said length being at least equal to the safety distance Dₘᵢₙ between each vehicle, the central station (3) sending rail operation control orders to each rail vehicle (4) for keeping said distance D between each vehicle.

16. Method according to any of the claims 9 to 15 **characterised in that** passive obstacles on the lanes are determined by the second transmission - reception means (6) and for each rail vehicle (4) in motion.

## Patentansprüche

1. Vorrichtung zum Positionieren und Steuern von Schienenfahrzeugen (4), mit festen Posten (1), welche erste Einrichtungen (2) zum Senden und Empfangen von Signalen aufweisen, und einer zentralen Steuerstelle (3), mit welcher die festen Posten (1) verbunden sind und welche eine Transportzone steuert,
**dadurch gekennzeichnet, dass**
- jedes Schienenfahrzeug (4) zweite Einrichtungen (6) zum Senden und Empfangen von Signalen mit einer spezifischen Kennzeichnung des Senders und mindestens einer Nachricht aufweist,
- die von den ersten Sende-/Empfangseinrichtungen (2) der festen Posten (1) gesendeten Signale eine spezifische Kennzeichnung des Senders und mindestens eine Nachricht enthalten,
- die zentrale Steuerstelle (3) Zugleitbefehle aussendet,
- jedes Schienenfahrzeug (4) und jeder feste Posten (1) Verarbeitungseinrichtungen (8) zum Bestimmen der Kennzeichnung und mindestens der Nachricht jedes empfangenen Signals aufweist,
- die Signale der erste und der zweiten Sende-/Empfangseinrichtungen (2, 6) nicht-sinuswellenförmige Funksignale mit sehr großer Bandbreite sind, deren Frequenzspektrum zwischen 1 und 10 GHz liegt.

2. Vorrichtung nach Anspruch 1, **dadurch gekennzeichnet, dass** jedes Schienenfahrzeug (4) einerseits Einrichtungen zum Bestimmen der Position und der Richtung des Fahrzeugs in der Transportzone und andererseits Einrichtungen zum Messen der tatsächlichen Geschwindigkeit des Fahrzeugs aufweist, wobei die Einrichtungen Signale von den Verarbeitungseinrichtungen empfangen.

3. Vorrichtung nach Anspruch 1 oder 2, **dadurch gekennzeichnet, dass** jedes Schienenfahrzeug (4) Einrichtungen zum Erkennen passiver Hindernisse oder anderer Fahrzeuge auf den Gleisen aufweist, welche Signale von den Verarbeitungseinrichtungen erhalten.

4. Vorrichtung nach einem der Ansprüche 1 bis 3, **dadurch gekennzeichnet, dass** die Bestimmung der Position in der Transportzone, der Geschwindigkeit und der Richtung jedes Schienenfahrzeugs (4) einerseits und die Hinderniserkennung andererseits in Echtzeit und gleichzeitig durchgeführt werden.

5. Vorrichtung nach einem der Ansprüche 1 bis 4, **dadurch gekennzeichnet, dass** die spezifische Kennzeichnung durch Pseudozufallscodierung erhalten ist.

6. Vorrichtung nach einem der Ansprüche 1 bis 5, **dadurch gekennzeichnet, dass** die von der Zentralstelle (3) gesendeten Zugleitbefehle Fahranweisungen für mindestens ein Schienenfahrzeug (4) enthalten.

7. Vorrichtung nach Anspruch 6, **dadurch gekennzeichnet, dass** die Befehle eine Mitteilung für das Schienenfahrzeug (4) enthalten.

8. Vorrichtung nach einem der Ansprüche 1 bis 7, **dadurch gekennzeichnet, dass** die zentrale Steuerstelle (3) eine Verarbeitungseinheit, um die von den festen Posten (1) übertragenen Daten zu zentralisieren und zu verarbeiten, und Einrichtungen zum Anzeigen der Daten in Echtzeit auf einem Bildschirm.

9. Verfahren zum Positionieren und Steuern von Schienenfahrzeugen, mit festen Posten (1), welche erste Signalsende-/-empfangseinrichtungen (2) aufweisen, und einer zentralen Steuerstelle (2), mit welcher die festen Posten (1) verbunden sind,
**dadurch gekennzeichnet, dass**
- jedes Schienenfahrzeug (4) zweite Signalsende-/-empfangseinrichtungen (6) aufweist,
- eine spezifische Kennzeichnung für jede der ersten und zweiten Sende-/Empfangseinrichtungen (2, 6) bestimmt wird, wobei die Signale nicht-sinuswellenförmige Funksignale mit sehr großer Bandbreite sind, deren Frequenzspektrum zwischen 1 und 10 GHz liegt, und welche die Kennzeichnung und mindestens eine Nachricht enthalten,
- für jedes der von dem festen Posten (1) und von jedem Schienenfahrzeug (4) empfangenen Signale die Kennzeichnung und zumindest die Nachricht dieses Signals durch Verarbeitungseinrichtungen (8) festgestellt werden,
- Zugleitbefehle durch die zentrale Steuerstelle (3) ausgegeben werden.

10. Verfahren nach Anspruch 9, **dadurch gekennzeichnet, dass** die Transportzone, welche von der zentralen Steuerstelle (3) gesteuert wird, und in der sich die Schienenfahrzeuge (4) bewegen, in ein Punktenetz aufgeteilt wird, das durch die Wiederholung der selben Grundmasche mit der Länge D definiert ist.

11. Verfahren nach Anspruch 10, **dadurch gekennzeichnet, dass** die Länge D der Grundmasche üblicherweise auf einige hundert Meter festgelegt wird.

12. Verfahren nach Anspruch 11, **dadurch gekennzeichnet, dass** die Zugleitbefehle von der zentralen Steuerstelle (3) an jedes Schienenfahrzeug (4) sendet, damit zu jedem Zeitpunkt nur ein einziges Fahrzeug (4) auf der Länge D vorhanden ist.

13. Verfahren nach Anspruch 11, **dadurch gekennzeichnet, dass** Zugleitbefehle von der zentralen Steuerstelle (3) an mindestens zwei Schienenfahrzeuge (4) gesendet werden, um ein Kopplungsmanöver innerhalb der Länge D durchzuführen.

14. Verfahren nach Anspruch 10, **dadurch gekennzeichnet, dass** die Länge D der Grundmasche in der Zeit variabel ist.

15. Verfahren nach Anspruch 14, **dadurch gekennzeichnet, dass** aus den von jedem der Schienenfahrzeuge (4) gesendeten Signalen die Länge D der Grundmasche in Echtzeit ermittelt wird, wobei diese mindestens gleich dem Sicherheitsabstand Dₘᵢₙ zwischen jedem Fahrzeug ist, wobei die zentrale Stelle (3) Zugleitbefehle an jedes Schienenfahrzeug (4) sendet, um den Abstand D zwischen jedem Fahrzeug aufrecht zu erhalten.

16. Verfahren nach einem der Ansprüche 9 bis 15, **dadurch gekennzeichnet, dass** durch die zweiten Sende-/Empfangseinrichtungen (6) und für jedes in Bewegung befindliche Schienenfahrzeug (4) passive Hindernisse auf den Gleisen festgestellt werden.
